# EUROPEAN PATENT APPLICATION

(11) **EP 2 741 489 A2**
(43) Date of publication of application: **11.06.2014**
(21) Application number: 13195829.0
(22) Date of filing: 05.12.2013
(51) Int. Cl.: H04N 5/232

(54) **Imaging device and method**

(30) Priority: 05.12.2012 JP 2012266506; 20.11.2013 KR 20130141638
(71) Applicant: Samsung Electronics Co., Ltd, Gyeonggi-do 443-742 (KR)
(72) Inventor: Okuda, Masaru, Yokohama (JP); Matsuo, Takeshi, Yokohama (JP)
(74) Representative: Brandon, Paul Laurence

(57) **Abstract**

An imaging device and a method for generating a panoramic image are provided. The imaging device includes an imaging unit configured to generate a plurality of continuous frame image in a certain direction in order to generate a panoramic image, an input unit configured to receive a command from a user during contiguous photographing of frame images via the imaging unit, a reference image setting unit configured to set a frame image captured by the imaging unit as a reference image upon receiving the command from the user, and an image synthesizer configured to generate a panoramic image by synthesizing other frame images around the reference image set by the reference image setting unit.

## Description

### CROSS-REFERENCE TO RELATED APPLICATION(S)

This application claims the benefit under 35 U.S.C. §119(a) of a Japanese patent application filed on December 5, 2012 in the Japanese Patent Office and assigned Serial No. 2012-266506, and of a Korean patent application filed on November 20, 2013 in the Korean Intellectual Property Office and assigned Serial No. 10-2013-0141638, the entire disclosures of each of which is hereby incorporated by reference.

### TECHNICAL FIELD

The present disclosure relates to an imaging device and a method for generating a panoramic image. More particularly, the present disclosure relates to an imaging device and an apparatus for clearly displaying an object intended by a user within a panoramic image.

### BACKGROUND

Technologically advanced cameras that provide a feature for capturing a panoramic image, wherein an image broader than a general image is captured, have been developed. For example, during the process of capturing a panoramic photograph, images captured while a camera is slowly moved in a horizontal or vertical direction are synthesized to obtain a panoramic image with a broader width in a movement direction than a general image. Research has been conducted on a panoramic image in various ways. During photographing of a panoramic image, it is difficult to display an object intended by a user within a random location of the panoramic image in a width direction. For example, with regard to the panoramic image, in order to display the object intended by the user within a center portion of the image, it is necessary to start to move a camera in a lateral direction of the corresponding object, such that an object image enters a visual field, and to move the camera by as much as the same degree as that from when the movement of the camera began.

Accordingly, a camera indicating a degree of movement for displaying an intended object within a random location of a panoramic image has been proposed. For example, a location of the panoramic image, for displaying the object intended by a user, may be determined. When the user starts moving a camera for capturing a panoramic image and presses on a button from a point of time when the object intended by the user enters a visual field, the camera may detect that the object is photographed from a point of time when the pressing of the button is performed. The camera may calculate a remaining degree of movement and display the remaining degree of movement on a display unit to the user in consideration of a location of the object intended by the user and widths of images captured from a point of time of starting movement to a point of time of pressing the button.

However, although an object is displayed at a location intended by a user in a panoramic image, an object intended by the user is not always clearly displayed. This is because a plurality of frame images captured during a camera movement are synthesized while the panoramic image is formed. Needless to say, since a plurality of frame images are synthesized to form an image of the object intended by the user, distortion generated due to connection between frame images is also reflected on the image of the object intended by the user. Thus, even if the object intended by the user is photographed at the intended location, an important object intended by the user is not photographed.

Therefore, a need exists for an imaging device and an apparatus for clearly displaying an object intended by a user within a panoramic image.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an imaging device and an apparatus for clearly displaying an object intended by a user within a panoramic image.

In accordance with an aspect of the present disclosure, an imaging device is provided. The imaging device includes an imaging unit configured to capture a plurality of continuous frame images in a certain direction in order to generate a panoramic image, an input unit configured to receive a command from a user for capturing a panoramic image via the imaging unit, a reference image setting unit configured to set the frame image captured by the imaging unit as a reference image when a command is input into the input unit from the user, and an image synthesizer configured to generate a panoramic image by synthesizing other frame images around the reference image set by the reference image setting unit.

In accordance with another aspect of the present disclosure, an imaging method is provided. The imaging method includes capturing a plurality of continuous frame images in a certain direction in order to generate a panoramic image, receiving a command from a user during the capturing of the plurality of continuous frame images, setting the frame image as a reference image when a command is input into the input unit from the user during the receiving, and generating a panoramic image by synthesizing other frame images around the reference image set during the setting.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments the present disclosure will be more apparent from the following description taken in conjunction with the accompanying drawings in which:
FIG. 1 is a block diagram of a structure of a camera according to an embodiment of the present disclosure;
FIG. 2 is a flowchart illustrating a process of generating and processing a panoramic image according to a first embodiment of the present disclosure;
FIGS. 3A, 3B, 3C, and 3D are schematic diagrams illustrating a process for generating and processing a panoramic image according to an embodiment of the present disclosure;
FIGS. 4A, 4B, 4C, and 4D are schematic diagrams illustrating a process for generating and processing a panoramic image according to an embodiment of the present disclosure;
FIGS. 5A and 5B illustrate a frame image captured by an imaging unit and a display image displayed on a display unit according to an embodiment of the present disclosure;
FIGS. 6A, 6B, and 6C are mimetic diagrams illustrating a case in which a panoramic image is synthesized based on a display region of a reference image according to an embodiment of the present disclosure;
FIG. 7 is a flowchart of processes executed by a camera according to a second embodiment of the present disclosure;
FIGS. 8A and 8B are mimetic diagrams illustrating a case in which a display region of a display image is determined based on a location for measurement of distance according to an embodiment of the present disclosure;
FIGS. 9A, 9B, and 9C are diagrams illustrating a case in which synthesis of a panoramic image fails according to an embodiment of the present disclosure; and
FIGS. 10A, 10B, 10C, 10D, and 10E are diagrams illustrating a case in which a synthesis range and a reference image of a panoramic image are changed according to a third embodiment of the present disclosure.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

### First Embodiment

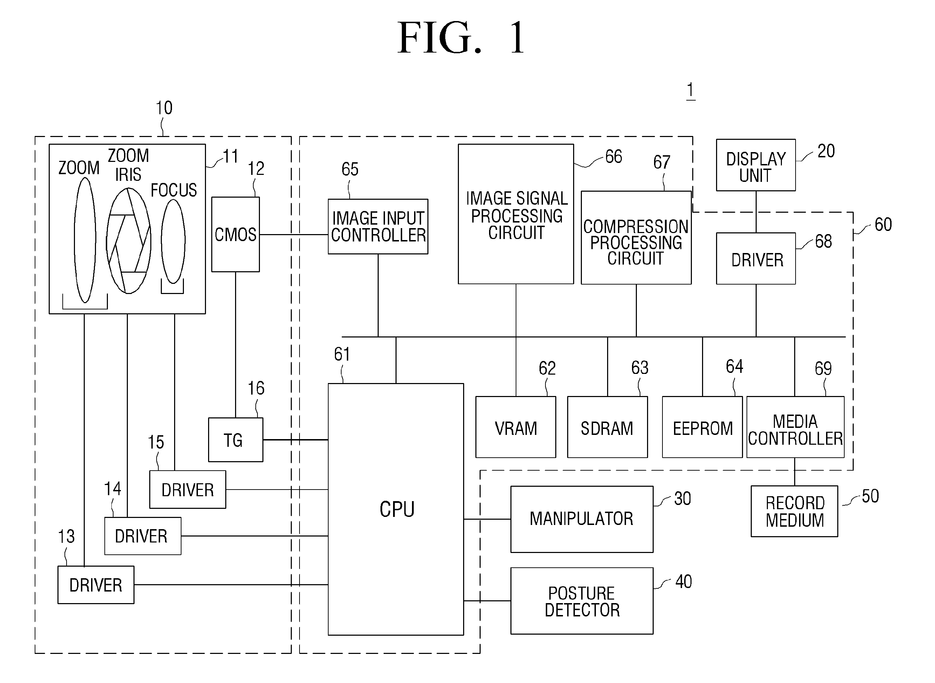

FIG. 1 is a block diagram of a structure of a camera according to an embodiment of the present disclosure.

Referring to FIG. 1, a camera 1 includes an imaging unit 10, a display unit 20, a manipulator 30, a posture detector 40, a recording medium 50, and a controller 60.

The imaging unit 10 captures an image of an object and generates an image (i.e., image data). The imaging unit 10 generates a plurality of continuous images (i.e., a frame image) in order to generate a panoramic image. The imaging unit 10 includes an optical system 11 for image formation of the object, and a Complementary Metal-Oxide Semiconductor (CMOS) sensor 12 for capturing the image of the object, formed by the optical system 11. The optical system 11 includes an optical device for zooming, an iris, and an optical device for focusing, which are controlled by the controller 60 via drivers 13, 14, and 15, respectively. The CMOS sensor 12 is controlled by the controller 60 via a Timing Controller (TG) 16.

For example, the display unit 20 is a Liquid Crystal Display (LCD) or an organic electro luminescence display and displays an image or various information. The display unit 20 is disposed on a rear surface of a main body (not shown) of the camera 1 and displays an image based on image data obtained from the object photographed by the imaging unit 10. The display unit 20 is controlled by the controller 60 via a display driver 68.

The manipulator 30 includes a shutter button, an up/down and right/left key, a power switch, a mode dial, and the like, and receives various commands from a user. In addition, the manipulator 30 may be implemented on a display of the display unit 20 in a touch panel manner.

The posture detector 40 detects a location change, such as the motion and inclination of the camera 1. For example, the posture detector 40 may be an angular velocity, such as a gyro sensor, and the like. In addition, the posture detector 40 may be an angular sensor or a terrestrial magnetism sensor. The posture detector 40 applies signals indicating the detection result of a location change of the camera 1 to the controller 60.

The recording medium 50 records image data. The recording medium 50 is detachably configured from the camera 1 and records the image data obtained by photographing the object in the imaging unit 10. The recording of the image data in the recording medium 50 and the removal of the image data from the recording medium 50 via a media controller 69 are controlled by the controller 60.

The controller 60 includes a Central Processing Unit (CPU) 61, a Video Random Access Memory (VRAM) 62, a Synchronous Dynamic Random Access Memory (SDRAM) 63, an Electrically Erasable Programmable Read-Only Memory (EEPROM) 64, an image input controller 65, an image signal processing circuit 66, a compression processing circuit 67, the display driver 68, and the media controller 69. These components are connected to communicate with each other via a bus.

The CPU 61 controls the aforementioned components and processes various calculations according to a program. The VRAM 62 and the SDRAM 63 temporally record a program or data as an operation area. The EEPROM 64 stores various programs or various data.

The image input controller 65 calls an output signal from the CMOS sensor 12 and writes the output signal in the SDRAM 63. The image signal processing circuit 66 performs various display image processes for generating display image data from frame image data during image capture.

The compression processing circuit 67 performs a compression process of image data. The display driver 68 controls the display unit 20. The media controller 69 controls the recording of image data in the recording medium 50 and the removal of image data from the recording medium 50.

In addition, the CPU 61 executes a program recorded in the EEPROM 64 to function as an input unit, a reference image setting unit, an image synthesizer, and a ratio recorder. Here, the input unit receives a command for determining a reference image from the user during photographing of frame images. The reference image setting unit sets a frame image captured by the imaging unit 10 as the reference image upon receiving the command from the user via the manipulator 30. The image synthesizer synthesizes other frame images around the reference image to generate a panoramic image. The ratio recorder records a ratio for removal from a frame image that is being captured while the display image is generated, which will be described with regard to an embodiment of the present disclosure.

In addition, the camera 1 may include other components in addition to the aforementioned components or may not include some of the aforementioned components.

Hereinafter, an operation of the camera 1 will be described with regard to an embodiment of the present disclosure.

The camera 1 synthesizes other frame images around the reference image determined by inputting the command for the reference image from the user during capturing of a plurality of continuous frame images for generating the panoramic image and processes panoramic image generation.

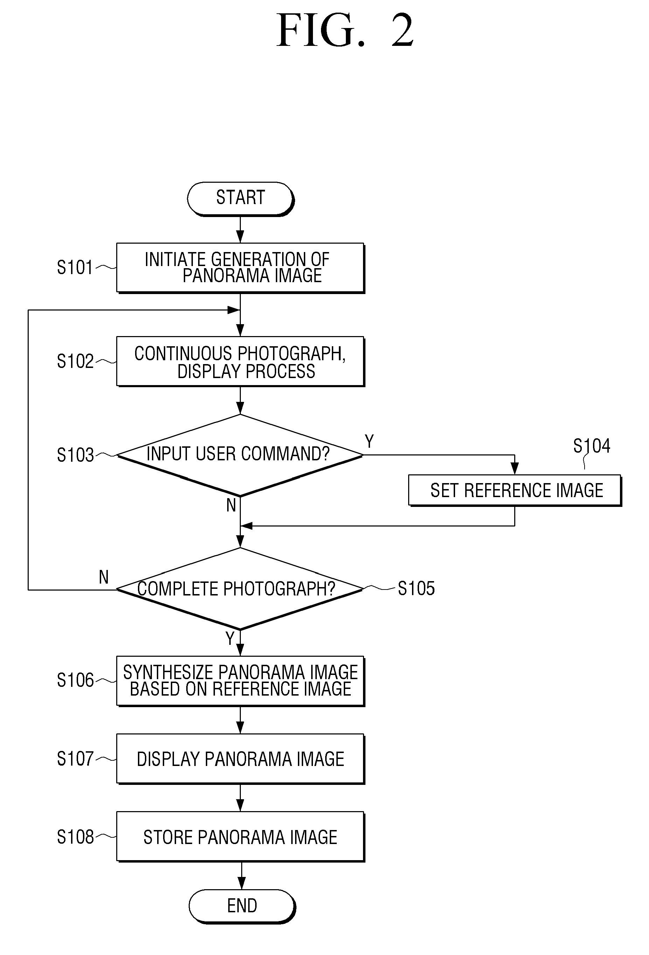

FIG. 2 is a flowchart illustrating a process of generating and processing a panoramic image according to a first embodiment of the present disclosure. In an embodiment of the present disclosure, an algorithm illustrated in the flowchart of FIG. 2 is recorded as a program in the EEPROM 64 of the camera 1 and is executed by the CPU 61.

Referring to FIG. 2, the camera 1 initiates a generation of a panoramic image according to an input of the shutter button of the manipulator 30 from the user in operation S101.

The camera 1 displays the display image based on the image data captured by the imaging unit 10 on the display unit 20 while continuously generating a plurality of frame images by controlling the imaging unit 10 in operation S102. Here, the user may move the camera 1 in a horizontal or vertical direction such that the camera 1 may capture a plurality of continuous frame images in a movement direction. The camera 1 may display guides indicating a movement direction on the display unit 20 such that the user may appropriately move the camera 1. For example, the camera 1 captures frame images in a clockwise format at every interval for continuous photographing of frame images. Alternatively, the camera 1 may perform an image capture of a plurality of continuous frame images whenever a posture or a location of the camera 1 is moved by a certain degree based on a signal acquired from the posture detector 40. In addition, the camera 1 may interpret the captured frame image to detect a change in the posture or location of the camera 1 and perform an image capture of a plurality of continuous frame images whenever the posture or location of the camera 1 is changed by a certain degree. The camera 1 records the captured frame image in the SDRAM 63. Continuous image processing will be described below.

The camera 1 determines whether the input unit receives the command for determining the reference image from the user in operation S103. For example, the command of the user is input via a half push of the shutter button, corresponding to a manipulation used for focusing on an image or a touch on a touch panel. Alternatively, the command of the user may be input by applying a vibration to the camera 1 via a manipulation using voice recognition during photographing as long as the image to be photographed is not hindered.

When the command from the user is not input in operation S103: NO, the camera 1 proceeds to operation S105. When the command from the user is input in operation S103: YES, the camera 1 sets a frame image captured by the imaging unit 10 as the reference image from a point of time when the user command is input into the reference image setting unit in operation S104. Here, in operation S104, the camera 1 may newly capture frame image via the imaging unit 10 and set the newly captured frame image as the reference image. The camera 1 stores the set reference image in the SDRAM 63. Processing of reference image setting will be described below.

The camera 1 determines whether continuous photographing of frame images is completed in operation S105. Whether the continuous photographing of frame images is completed may be determined by pushing the shutter button of the manipulator 30 by the user. Alternatively, it may be determined that the continuous photographing of frame images is completed when a certain period of time elapses from a start point of time of continuous photographing of frame images. It may be determined that the continuous photographing of frame images is completed when a degree of a change in the posture or location of the camera 1 reaches a certain degree. When the continuous photographing of frame images is not completed in operation S105: NO, the camera 1 returns to operation S102 to continue to capture a frame image. When the continuous photographing of frame images is completed in operation S105: YES, the camera 1 proceeds to a process of operation S106.

The camera 1 generates a panoramic image based on the plural frame images captured by the image synthesizer in operation S102 and the reference image set in operation S104 and operation S106. The camera 1 synthesizes the plural frame images around the reference image to generate the panoramic image from a point of time when the reference image is generated. Panoramic image generation will be described below.

The camera 1 displays the panoramic image generated in operation S106 on a display of the display unit 20 in operation S107. The camera 1 stores the generated panoramic image in the SDRAM 63 or the recording medium 50 and completes the processing in operation S108.

Hereinafter, operations of processes shown in the flowchart of FIG. 2 will be described.

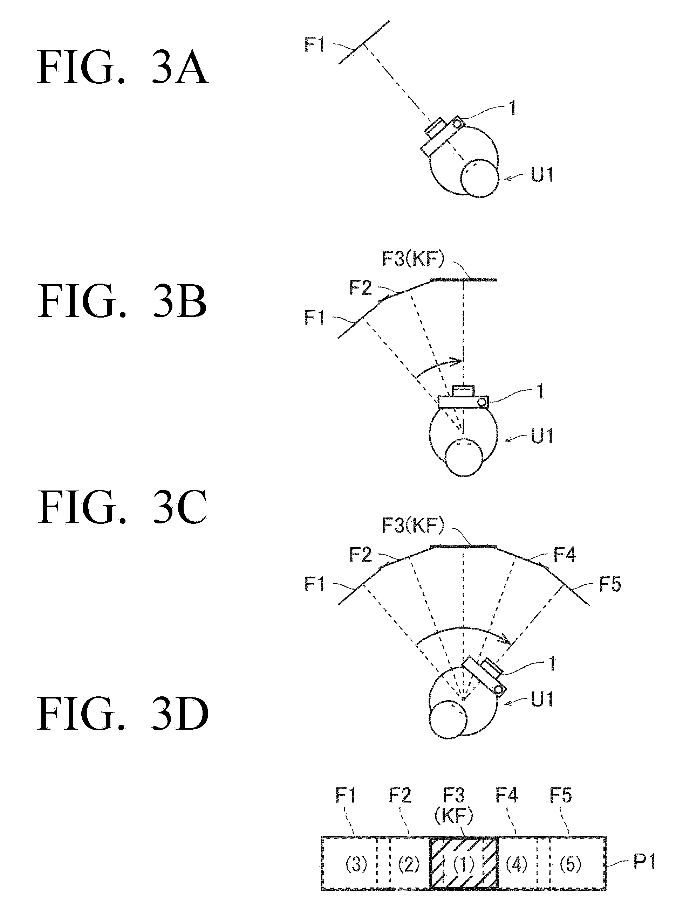

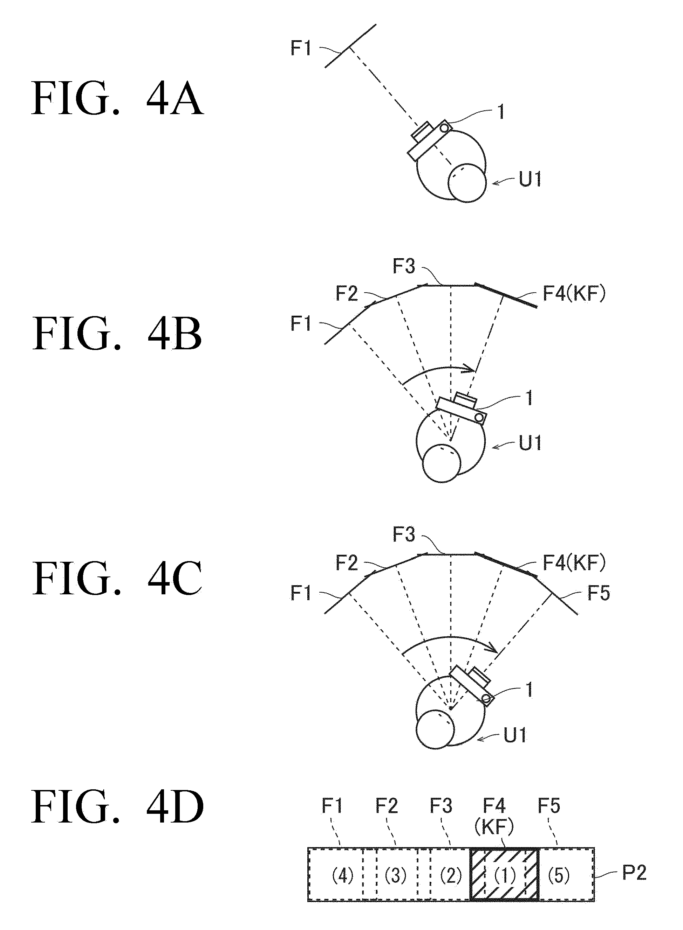

FIGS. 3A, 3B, 3C, 3D, 4A, 4B, 4C, and 4D are schematic diagrams illustrating a process for generating and processing a panoramic image according to an embodiment of the present disclosure.

Referring to FIGS. 3A and 4A, a case in which a continuous photographing of frame images is initiated is illustrated. Referring to FIGS. 3B and 4B, a case in which a reference image is set during capturing of a plurality of continuous frame images for generating the panoramic image is illustrated. Referring to FIGS. 3C and 4C, a case in which a continuous photographing of frame images is completed is illustrated. Referring to FIGS. 3D and 4D, a case in which other frame images around the reference image are synthesized to generate a panoramic image is illustrated.

### Continuous photograph processing and reference image setting processing

First, continuous photograph processing and reference image setting processing illustrated in operations 102 and 104 of FIG. 2 will be described.

As illustrated in FIG. 3A, a user U1 inputs a shutter button of the camera 1 to initiate photographing of frame images in order to generate the panoramic image. When the photographing of frame images is initiated, the camera 1 captures a frame image F1 and stores the frame image F1 in the SDRAM 63.

As illustrated in FIG. 3B, the user U1 performs continuous photographing of frame images while moving the camera 1 in the direction of the arrow and inputs a half push of the shutter button at a point when an image of the object supposed to be photographed, such as a figure, and the like, enters the frame image. The camera 1 captures frame images F2 and F3 in succession to the frame image F1 and stores the frame images F2 and F3 in the SDRAM 63. In addition, the camera 1 receives the command from the user from a point of time when the frame image F3 is captured and thus the frame image F3 is set as a reference image KF. The camera 1 stores the setting of the frame image F3 as the reference image KF in the SDRAM 63.

As illustrated in FIG. 3C, the user U1 moves the camera 1 in the direction of the arrow and inputs the shutter button at a location when photographing of frame images is supposed to be completed to complete the continuous photographing of frame images. The camera 1 stores frame images F4 and F5 that are captured until the photographing of frame images is completed, in the SDRAM 63.

### Processing of panoramic image synthesis

Hereinafter, the processing of panoramic image synthesis illustrated in operation S106 of FIG. 2 will be described.

As illustrated in FIG. 3D, the camera 1 performs synthesis of a panoramic image P1 based on the reference image KF F3 and the frame images F1, F2, F4, and F5, stored in the SDRAM 63 in the processes of FIGS. 3A, 3B, and 3C.

First, in operation 1, the camera 1 sets the reference image KF F3 as an original image that is a base of the panoramic image. Thereafter, in operation 2, the camera 1 synthesizes the frame image F2 immediately prior to capturing the reference image KF, on the left of the reference image KF set as the original image. The reference image KF is synthesized so as to display the reference image KF on a portion where the reference image KF and the frame image F2 are overlapped. In operation 3, the camera 1 synthesizes the frame image F1 on the left of the image synthesized in operation 2. Here, a portion where the reference image KF and the frame image F1 are overlapped is also present and the reference image KF is synthesized so as to display the reference image KF on the portion where the reference image KF and the frame image F1 are overlapped.

When synthesis of the frame images captured prior to capturing the reference image KF is completed, the camera 1 synthesizes the frame image F4 captured immediately prior to capturing the reference image KF in operation 4, on the right of the image synthesized in operation 3 (on the right of the reference image KF). The reference image KF is synthesized so as to display the reference image KF on the portion where the reference image KF and the frame image F4 are overlapped. Thereafter, in operation 5, the camera 1 synthesizes the frame image F4 on the right of the image synthesized in operation 4. Here, a portion where the reference image KF and the frame image F5 are overlapped is also present and the reference image KF is synthesized so as to display the reference image KF on the portion where the reference image KF and the frame image F5 are overlapped. When processing of operation 5 is completed, the panoramic image P1 is formed. The camera 1 displays the panoramic image P1 on the display unit 20 and stores the panoramic image P1 in the SDRAM 63 or the recording medium 50.

The processing and generation of a panoramic image illustrated in FIGS. 4A, 4B, 4C, and 4D are different from that illustrated in FIGS. 3A, 3B, 3C, and 3D in terms of a location of the set reference image KF.

Although the frame image F3 corresponding to a center of a photograph range is set as the reference image KF in FIGS. 3A, 3B, 3C, and 3D, the frame image F4 that is not the center of the photograph range is set as the reference image KF in FIGS. 4A, 4B, 4C, and 4D. In this case, the camera 1 performs synthesis of a panoramic image based on the frame image F4 set as the reference image KF as in FIGS. 3A, 3B, 3C, and 3D. More specifically, as illustrated in FIG. 4D, in operation 1, the camera 1 sets the reference image KF (F4) as an original image that is a base of the panoramic image. Thereafter, in operations 2 to 5, a synthesis process is sequentially performed on the frame images F3, F2, F1, and F5 as in FIGS. 3A, 3B, 3C, and 3D. Thus, a panoramic image P2 is completed. The camera 1 displays the panoramic image P2 on the display unit 20 and stores the panoramic image P2 in the SDRAM 63 or the recording medium 50.

### Display image

For example, as described above, when the user U1 moves the camera 1 held by hand in a horizontal direction to perform continuous photographing of frame images, captured frame images are likely to be distorted in a longitudinal direction. As a result, in order to generate continuous panoramic images in a certain direction while a reference image is displayed via the process illustrated in FIG. 3D, any image is not captured with respect to a portion where the frame images are distorted, and thus, the panoramic image without the corresponding distorted portion is generated. In this case, although an object intended to be captured by a user is displayed in the panoramic image, continuous clear images are not generated in a certain direction, which is inappropriate.

Thus, according to an embodiment of the present disclosure, an image formed by removing upper and lower portions of frame images, which are continuously captured in a certain direction, at a ratio in a height direction that crosses the certain direction is displayed on the display unit 20 as a display image. Due to the display image, the continuous clear panoramic images may be generated in a certain direction while the object intended by the user is displayed, which will be described below.

First, the display image will be described.

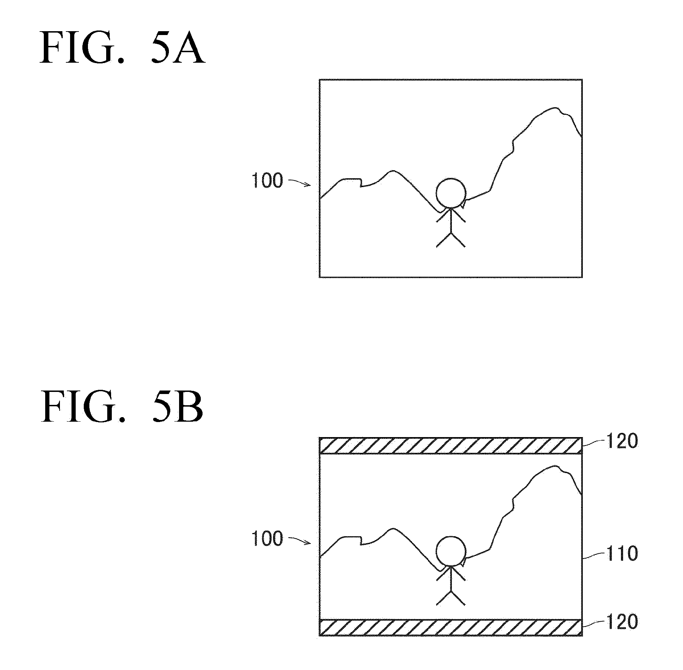

FIGS. 5A and 5B illustrate a frame image captured by the imaging unit and a display image displayed on the display unit according to an embodiment of the disclosure. FIG. 5A illustrates a frame image 100 captured by an imaging unit 10 and FIG. 5B illustrates a relationship between the captured frame image 100 and a display region 110.

Referring to FIGS. 5A and 5B, the frame image 100 that is continuously captured in a certain direction includes the display region 110 formed by removing upper and lower portions thereof in a height direction crossing the certain direction and a non-display region 120 that is not included in the display region 110 and is removed. The display region 110 corresponds to the display image and is displayed on the display unit 20. The non-display region 120 is not displayed on the display unit 20 but is stored in the SDRAM 63 as a portion of the frame image 100.

Hereinafter, a relationship between the display image and the generated panoramic image will be described.

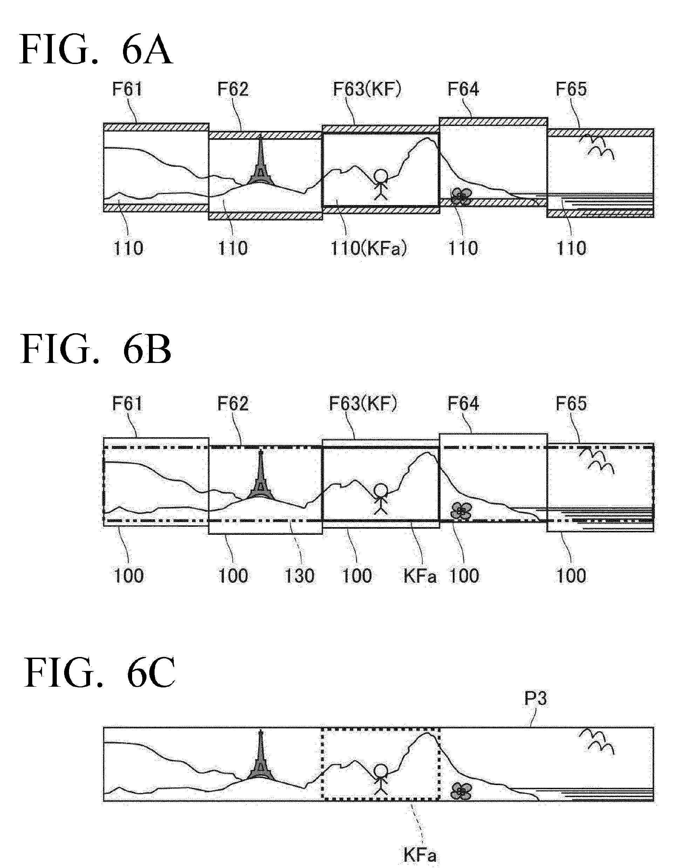

FIG. 6A, 6B, and 6C are mimetic diagrams illustrating a case in which a panoramic image is synthesized based on a display region of a reference image according to an embodiment of the present disclosure.

FIG. 6A illustrates continuously captured frame images F61 to F65 and the display region 110 of each frame image and FIG. 6B illustrates a case in which a synthesis range 130 of a panoramic image is determined based on the display region 110 of a reference image KF F63. In addition, FIG. 6C illustrates a panoramic image P3 generated according to the synthesis range 130.

Referring to FIG. 6A, upper and lower portions of photograph ranges of the continuously captured frame images F61 to F65 are distorted. In addition, the frame image F63 is set as the reference image KF. Distortion of the photograph ranges may be determined using a general panoramic synthesis method, such as a location comparison between feature points of respective frame images obtained via an image analysis or an analysis of information regarding a change in the posture or the camera 1 that is performing photographing of a plurality of continuous frame images. Here, the information is obtained from the posture detector 40.

Here, the display region 110 of the frame image is displayed as the display image on the display unit 20 that is viewed by the user U1 in order to examine the captured images during capturing of a plurality of continuous frame images for generating the panoramic image. In order to set the reference image KF, the user U1 may also set the reference image KF while viewing the display region 110 displayed on the display unit 20. For example, an image supposed to be displayed by the user from the panoramic image is an image displayed on the display region 110 of the reference image KF. Thus, when the display region 110 of the reference image KF is displayed and continuous panoramic images are generated in a certain direction, continuous clear panoramic images may be generated in the certain direction while the object intended by the user is displayed.

As illustrated in FIG. 6A, the camera 1 may determine the synthesis range 130 of a panoramic image according to a height of the reference image KF in order to generate continuous clear panoramic images in a certain direction while displaying the display region 110 of the reference image KF. Here, although an upper portion of the frame image F62 or a lower portion of the frame image F64 is included in the synthesis range 130 of the panoramic image, upper and lower portions of the display region 110 are disconnected due to distortion of a photograph range.

However, referring to FIG. 6B, the frame image 100 stores the non-display region 120 as well as the display region 110 and thus an entire image included in the synthesis range 130 of the panoramic image is stored as a portion of the frame image 100. Thus, the camera 1 may set the display region 110 of the reference image KF as a partial reference image KFa and synthesis portions included in the synthesis range 130 of the panoramic image in the frame image 100 in the same way as in FIG. 3D.

As described above, the camera 1 according to the first embodiment of the present disclosure may process panoramic image generation by receiving determination of the reference image KF from a user and synthesizing other frame images around the determined reference image KF while capturing a plurality of contiguous frame images in a certain direction.

In addition, the camera 1 generates the panoramic image by determining an image displayed on the display unit 20, formed by removing upper and lower portions of the reference image KF in a height direction that crosses the certain direction, as the partial reference image KFa, and synthesizing portions of other frame images, the heights of which are adjusted, around the partial reference image KFa.

Referring to FIG. 6C, while an object intended by the user is completely displayed (refer to a dotted region of FIG. 6C), continuous clear panoramic images may be generated in the certain direction. The partial reference image KFa that is examined by the user via the display unit 20 is entirely displayed, and thus, a portion that is most noticeable by the user, corresponds to a portion examined by the user during photographing of frame images such that the user obtains a satisfactory panoramic image.

In addition, according to an embodiment of the present disclosure, when frame images around the reference image KF are synthesized, the reference image KF is synthesized so as to display the reference image KF on a portion where the reference image KF and the frame images are overlapped, to which embodiments of the present disclosure are not limited. Alternatively, the reference image KF may be synthesized so as to display the reference image KF in a central portion of the reference image KF, and other frame images may be synthesized to display a smooth panoramic image on an edge portion of the reference image KF via a general synthesis method of a panoramic image. Alternatively, a primary portion may be extracted from the reference image KF based on face recognition via image analysis and other frame images may be synthesized so as to display an image corresponding to the primary portion.

In addition, according to an embodiment of the present disclosure, all captured frame images are synthesized as a panoramic image, to which embodiments of the present disclosure are not limited. For example, the camera 1 may select frame images used to generate a panoramic image from all captured frame images, based on various conditions, such as photograph timing, photograph posture, or the like. In this case, a frame image captured at a point of time when a user input setting of a reference image may be selected as a frame image as the reference image. In addition, when an interval of continuous photographing of frame images is large, if there is no frame image captured at a point of time when the user inputs a command for determining the reference image, the camera 1 may capture a frame image at the time of receiving the command. The camera 1 may capture a frame image at the time of recognizing the command. The camera 1 determines the captured frame image as the reference image KF.

In addition, according to an embodiment of the present disclosure, the user moves the camera 1 in order to capture continuous frame images in a certain direction, to which embodiments of the present disclosure are not limited. The camera 1 may capture the continuous frame images in the certain direction using a device that is installed in the camera 1 for moving the camera 1. Alternatively, the camera 1 may capture the continuous frame images in the certain direction while mounted on a vehicle that moves in the certain direction.

In addition, according to an embodiment of the present disclosure, photographing of continuous frame images is performed toward the right from the left, to which embodiments of the present disclosure are not limited. Photographing of continuous frame images may be performed in any constant direction, such as a direction toward the left from the right, a direction upward from a lower portion, an inclined direction, or the like.

### Second embodiment

Hereinafter, the camera 1 will be described with regard to a second embodiment of the present disclosure.

According to the first embodiment of the present disclosure, an image, which is formed by removing upper and lower portions of frame images, continuously captured in a certain direction, at a ratio in a height direction, is displayed as a display image on the display unit 20, thereby generating a panoramic image that is intended by the user and from which shaking of the camera is removed. However, a degree of influence of shaking of the camera depends on a distance from a target object or settings of a zoom ratio. For example, during photographing of a person at a short distance, since a portion occupied by the person with respect to the display image is large, the target object is easily deviated from a range of the display image due to shaking of the camera and a degree of influence of the shaking of the camera is increased. During photographing of a person at a long distance, since a portion occupied by the person with respect to the display image is small, it is not likely that the target object is deviated from a range of the display image and a degree of influence of shaking of the camera is reduced. Similarly, the degree of influence of the shaking of the camera varies according to a distance from an object, an appropriate value as a ratio at which upper and lower portions of frame images are removed in a height direction during generation of the display image may vary. Thus, according to the second embodiment of the present disclosure, the camera 1 changes a ratio at which upper and lower portions of frame images are removed during generation of the display image, according to various conditions, such as photograph timing, photograph posture, or the like.

Hereinafter, repeated descriptions of the first embodiment of the present disclosure are not given and the second embodiment of the present disclosure will be described in terms of differences from the first embodiment of the present disclosure.

The configuration of the camera 1 according to the second embodiment of the present disclosure is the same as in the first embodiment of the present disclosure.

Hereinafter, an operation of the camera 1 will be described with regard to the second embodiment of the present disclosure.

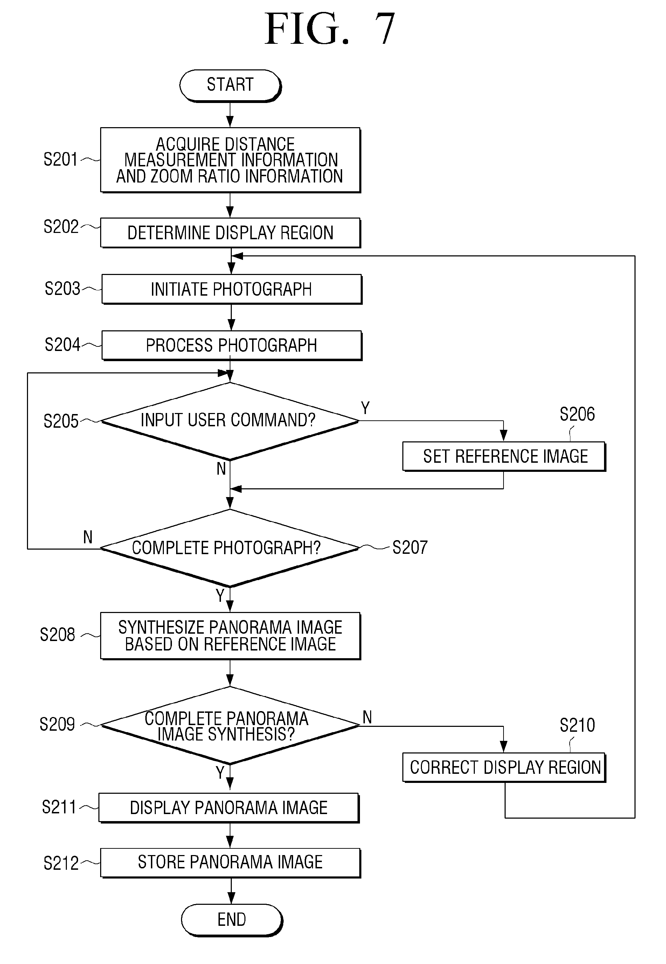

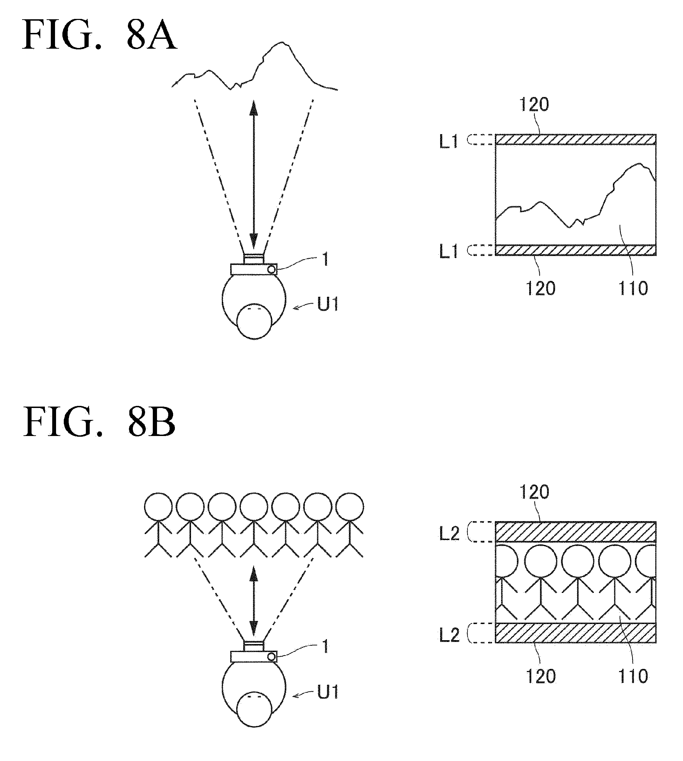

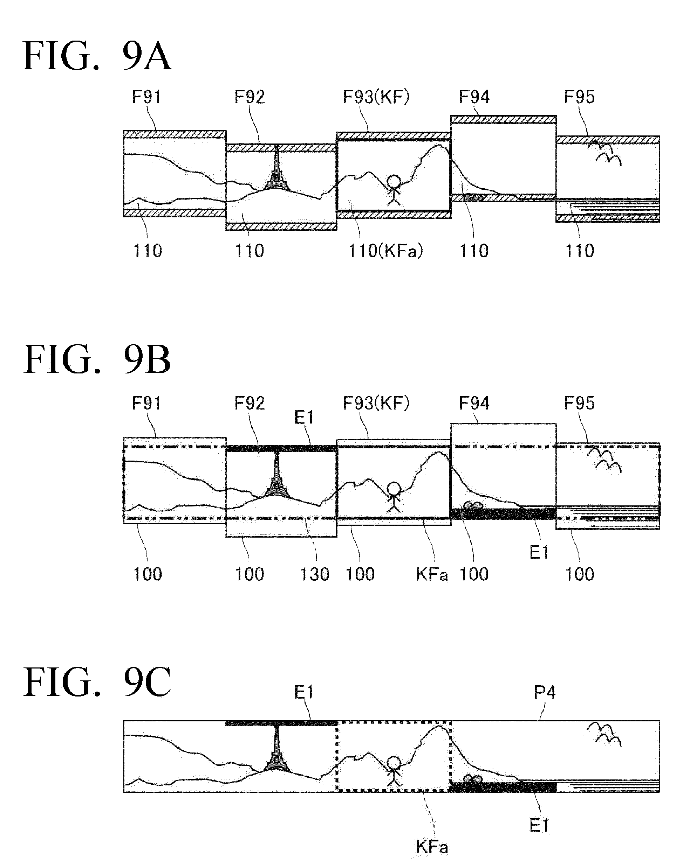

FIG. 7 is a flowchart of processes executed by the camera 1 according to the second embodiment of the present disclosure. FIGS. 8A and 8B are mimetic diagrams illustrating a case in which a display region of a display image is determined based on a location for measurement of distance. FIGS. 9A, 9B, and 9C are diagrams illustrating a case in which synthesis of a panoramic image fails.

An algorithm illustrated in the flowchart of FIG. 7 is recorded as a program in the EEPROM 64 of the camera 1 and is executed by the CPU 61. FIG. 8A illustrates the display region 110 when a location for measurement of distance is far according to an embodiment of the present disclosure. FIG. 8B illustrates the display region 110 when a location for measurement of distance is close according to an embodiment of the present disclosure. FIG. 9A illustrates the continuously captured frame images F91 to F95 and the display region 110 of each frame image and FIG. 9B illustrates a case in which the synthesis range 130 of a panoramic image is determined based on the display region 110 of a reference image KF F93 according to an embodiment of the present disclosure. In addition, FIG. 9C illustrates a panoramic image P4 generated according to the synthesis range 130.

Referring to FIG. 7, the camera 1 controls the imaging unit 10 to acquire distance measurement information indicating a distance between the camera 1 and an object, obtained during focus adjustment via an auto focus function, and zoom ratio information indicating a zoom ratio in operation S201.

Thereafter, the camera 1 determines a ratio at which upper and lower portions of frame images are removed in a height direction during generation of the display image, based on the distance measurement information and zoom ratio information acquired in operation S201 and operation S202.

Referring to FIG. 8A, the camera 1 reduces the ratio as a distance from the object, indicated by the distance measurement information, is increased.

Referring to FIG. 8B, the ratio is increased as the distance from the object, indicated by the distance measurement information, is reduced. Similarly, the camera 1 reduces the ratio because it is deemed that influence of shaking of the camera is reduced as the zoom ratio indicated by the zoom ratio information is reduced. In addition, the camera 1 increases the ratio because it is deemed that influence of shaking of the camera is increased as zoom ratio indicated by the zoom ratio information is increased. The ratio based on the distance measurement information and the zoom ratio information may be determined as an appropriate value in a range of, for example, 5% to 40%. The camera 1 generates the display image according to the determined ratio, displays the display image on the display unit 20, and proceeds to operation S203.

Thereafter, operations S203 to S208 are the same as operations S102 to S106 of FIG. 2. Thus, descriptions thereof are not given here.

In operation S208, after a panoramic image is synthesized, the camera 1 determines whether the panoramic image synthesis is successful in operation S209. The camera 1 determines that the panoramic image synthesis is successful when a decreased shaking of the camera occurs in the upper and lower portions of the frame images and the continuous clear panoramic images P3 may be generated in a certain direction while displaying the partial reference image KFa of the object intended by the user, as illustrated in FIGS. 6A, 6B, and 6C.

Referring to FIG. 9A, the camera 1 determines that the panoramic image synthesis fails when shaking of the camera occurs in the upper and lower portions of the frame image.

Referring to FIGS. 9B and 9C, a region E1 that is not photographed during generation of the panoramic image is generated.

When the camera 1 determines that the panoramic image synthesis fails in operation S209: NO, the camera 1 corrects the ratio determined in operation S202 to a higher ratio via a ratio recorder in operation S210. The camera 1 generates the display image according to the corrected ratio, displays the display image on the display unit 20, and returns to operation S203. When the camera 1 determines that the panoramic image synthesis is successful in operation S209: YES, the camera 1 displays the panoramic image generated in operation S208 on a display of the display unit 20 in operation S211. The camera 1 stores the generated panoramic image in the SDRAM 63 or the recording medium 50 to complete a process in operation S212.

As described above, the camera 1, according to the second embodiment of the present disclosure, increases the ratio at which the upper and lower portions of frame images are removed in the height direction during generation of the display image as a distanced from the object decreases. Thus, when the distance from the object is short and influence of shaking of the camera on the panoramic image is very low, a difference between a narrow range displayed as the display image and a wide range photographed as a frame image is increased. Thus, even if the target object is deviated from the display image due to the shaking of the camera, the corresponding object may be photographed as the frame image and failure in panoramic image synthesis may be prevented.

In addition, when the camera 1 restricts a frame image other than the reference image KF to the height of the partial reference image KFa, if the camera 1 cannot generate continuous clear panoramic images in a certain direction, the ratio at which upper and lower portions of frame images are removed in a height direction during generation of the display image. Thus, even if the target object is deviated from the display image due to the shaking of the camera, the corresponding object may be more clearly photographed as a frame image and panoramic image synthesis may be repeated to prevent failure in panoramic image synthesis.

### Third embodiment

Hereinafter, the camera 1 will be described with regard to a third embodiment of the present disclosure.

According to the first and second embodiments of the present disclosure, a panoramic image may be generated by synthesizing a series of continuous frame images in a certain direction, which are captured once via continuous photographing of frame images. However, a width to be obtained via one continuous photographing of frame images is limited according to a type of a camera and a panoramic image intended by a user may not be generated. Thus, according to an embodiment of the present disclosure, the camera 1 further captures another series of continuous frame images in a certain direction separately from a series of continuous frame images in a certain direction and generates a panoramic image from the series of frame images and another series of frame images.

Hereinafter, repeated descriptions of the first and second embodiments of the present disclosure are not given and the third embodiment of the present disclosure will be described in terms of differences from the first embodiment of the present disclosure.

The configuration of the camera 1 according to the third embodiment of the present disclosure is the same as in the first and second embodiments of the present disclosure.

Hereinafter, an operation of the camera 1 will be described with regard to the third embodiment of the present disclosure.

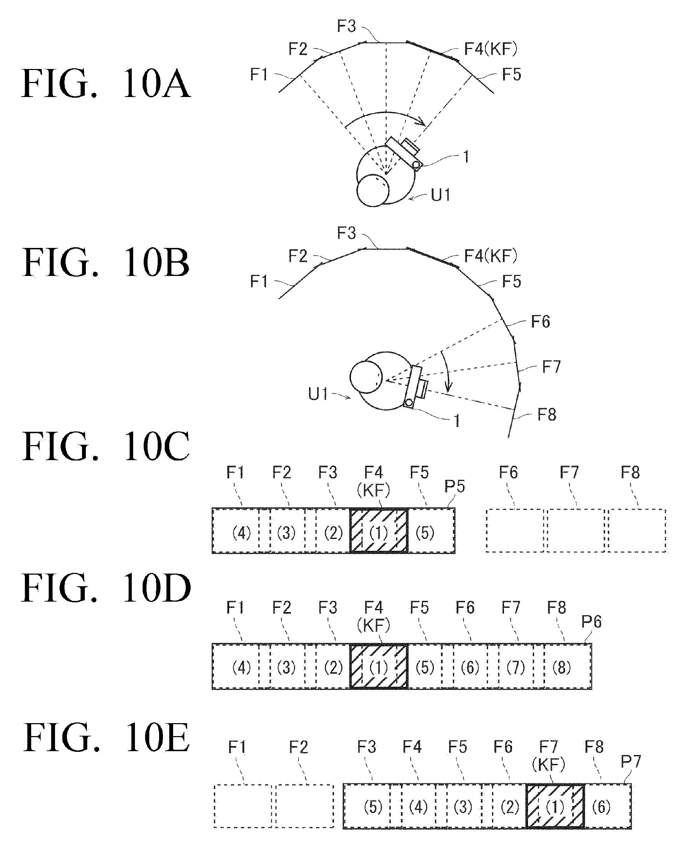

FIGS. 10A, 10B, 10C, 10D, and 10E are diagrams illustrating a case in which a synthesis range and a reference image of a panoramic image are changed according to a third embodiment of the present disclosure.

FIG. 10A illustrates a case in which a frame image F4 is set as a reference image KF and a series of frame images F1 to F5 is completely captured. FIG. 10B illustrates a case in which another series of frame images F6 to F8 is completely captured. FIG. 10C illustrates a case in which a panoramic image P5 is generated from a series of the frame images F1 to F5 and another series of the frame images F6 to F8 is recorded. FIG. 10D illustrates a case in which another series of the frame images F6 to F8 is synthesized with a panoramic image P5 and a new panoramic image P6 is generated. FIG. 10E illustrates a case in which a frame image F7 is set as a reference image KF and a new panoramic image P7 is generated from the frame images F3 to F8.

Referring to FIGS. 10A, 10B, and 10C, when a series of the frame images F1 to F5 and another series of the frame images F6 to F8 are completely captured, the camera 1 generates the panoramic image P5 from a series of the frame images F1 to F5 and stores the panoramic image P5 in the SDRAM 63. In this case, another series of the frame images F6 to F8 is stored in the SDRAM 63 together with a series of the frame images F1 to F5 and the panoramic image P5.

Referring to FIG. 10D, the camera 1 synthesizes another series of the frame images F6 to F8 with the panoramic image P5 generated from a series of the frame images F1 to F5, based on a command from a user, to generate a new panoramic image P6.

Referring to FIG. 10E, after the panoramic image P6 is generated, a new panoramic image P7 is generated from another series of the frame images F6 to F8 and the frame images F3 to F5 among a series of the frame images F1 to F5, based on an additional command from the user. In this case, the frame image F7 is set as the reference image KF to perform panoramic image synthesis based on the frame image F7 set as the reference image KF as in FIG. 3D. More specifically, as illustrated in FIG. 10E, in operation 1, the camera 1 sets the reference image KF F) as an original image that is a base of the panoramic image. Thereafter, in operations 2 to 6, synthesis is sequentially performed on the frame images F6, F5, F4, F3, and F8 in this order as in FIG. 3D. Thus, the panoramic image P7 is completed. The camera 1 displays the panoramic image P7 on the display unit 20 and stores the panoramic image P7 in the SDRAM 63 or the recording medium 50.

As described above, the camera 1, according to the third embodiment of the present disclosure, further captures another series of continuous frame images separately from a series of continuous frame images including a reference image and synthesizes the reference image with a series of the frame images and a random frame image included in another series of the frame images. Thus, even in an environment in which a width to be obtained via one continuous photographing of frame images is limited, a panoramic image having a range intended by a user may be generated.

In addition, the camera 1 sets a new reference image KF from a series of the frame images and a random frame image included in another series of the frame images, and synthesizes the reference image FK with a series of the frame images and the random frame image included in another series of the frame images. Thus, the camera 1 may generate the panoramic image containing a frame image with a random range using the random frame image as the reference image KF. Thus, the user may regenerate a clearly displayed panoramic image in which an object intended by the user is clearly displayed in an intended range after photographing of frame images.

According to the aforementioned various embodiments of the present disclosure, other frame images around a determined reference image are synthesized to generate a panoramic image when determination of the reference image is input from a user during photographing of a plurality of frame images in a constant direction. Thus, the panoramic image may be generated while an object intended by the user is clearly displayed.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An imaging device comprising:
an imaging unit configured to capture a plurality of continuous frame images in a certain direction in order to generate a panoramic image;
an input unit configured to receive a command from a user during capturing of the plurality of continuous frame images via the imaging unit;
a reference image setting unit configured to set the frame image captured by the imaging unit as a reference image when a command is input into the input unit from the user; and
an image synthesizer configured to generate a panoramic image by synthesizing other frame images around the reference image set by the reference image setting unit.

2. The image device of claim 1, further comprising a display unit configured to display, as a display image, an image formed by removing upper and lower portions of the frame images captured by the imaging unit, at a ratio in a height direction that crosses the certain direction,
wherein the image synthesizer sets a portion of the referenced image, displayed on the display unit, as a partial reference image, and synthesizes some of other frame images around the partial reference image, which are restricted to a height of the partial reference image, to generate the panoramic image.

3. The image device of claim 2, wherein the display unit is configured to increase the ratio as a distance from an object decreases.

4. The image device of claim 2, further comprising a ratio recorder configured to increase the ratio and store the corresponding ratio when the partial reference image is not capable of being synthesized, if the frame image other than the reference image is set to a height of the partial reference image.

5. The image device of claim 1, wherein the imaging unit is further configured to capture another series of continuous frame images in a certain direction separately from a series of continuous frame images containing the reference image, and
wherein the image synthesizer is further configured to synthesize the reference image with a series of the frame images and a random frame image contained in another series of the frame images.

6. The image device of claim 5, wherein the reference image setting unit is further configured to set a selected frame image as a new reference image upon receiving a selection of one frame image among the random frame image contained in another series of the frame images and a series of the frame images captured by the image synthesizer, and
wherein the image synthesizer is further configured to synthesize the new reference image with the random frame image contained in another series of the frame images and a series of the frame images.

7. An imaging method comprising:
capturing a plurality of continuous frame images in a certain direction in order to generate a panoramic image;
receiving a command from a user during capturing of the plurality of continuous frame images during the capturing;
setting the frame image captured during the capturing as a reference image when a command is input into the input unit from the user during the receiving; and
generating a panoramic image by synthesizing other frame images around the reference image set during the setting.

8. The imaging method of claim 7, further comprising displaying, as a display image, an image formed by removing upper and lower portions of the frame images captured during the capturing, at a ratio in a height direction that crosses the certain direction,
wherein the synthesizing of the other frame images around the reference image comprises setting a portion of the referenced image, displayed on the display unit, as a partial reference image, and synthesizing some of the other frame images around the partial reference image, which are restricted to a height of the partial reference image, to generate the panoramic image.

9. The imaging method of claim 8, wherein the displaying of the image comprises increasing the ratio as a distance from an object decreases.

10. The imaging method of claim 8, further comprising increasing the ratio and storing the corresponding ratio when the partial reference image is not capable of being synthesized, if the frame image other than the reference image is set to a height of the partial reference image.

11. The imaging method of claim 7, wherein the capturing of the plurality of continuous frame images comprises further capturing another series of continuous frame images in a certain direction separately from a series of continuous frame images containing the reference image, and
wherein the synthesizing comprises synthesizing the reference image with a series of the frame images and a random frame image contained in another series of the frame images.

12. The imaging method of claim 11, wherein the setting of the frame image comprises setting a selected frame image as a new reference image upon receiving a selection of one frame image among the random frame image contained in another series of the frame images and a series of the frame images captured during the synthesizing, and
wherein the synthesizing comprises synthesizing the new reference image with the random frame image contained in another series of the frame images and a series of the frame images.
